# EUROPÄISCHE PATENTANMELDUNG

(11) **EP 2 821 221 A1**
(43) Veröffentlichungstag der Anmeldung: **07.01.2015**
(21) Anmeldenummer: 13175042.4
(22) Anmeldetag: 04.07.2013
(51) Int. Cl.: B32B 7/06, B32B 27/08, B32B 27/32, B65D 65/40

(54) **Peelfähige Folie**

(71) Anmelder: PetroplastVinora AG, 9204 Andwil (CH)
(72) Erfinder: Kölble, Jens, 8630 Rüti (ZH) (CH); Forster, Hans Jörg, 9220 Bischofszell (CH)
(74) Vertreter: Hepp Wenger Ryffel AG

(57) **Zusammenfassung**

Die vorliegende Erfindung betrifft eine Folie (F), umfassend Siegelschicht (7), dadurch gekennzeichnet, dass die Siegelschicht (7) ein Antifog-Material, umfassend mindestens eine Substanz mit Antifog-Eigenschaften und ein Polyethylen als Träger, enthält und einen Anteil an Polypropylen von 50 bis 80 Gew.-%, bezogen auf das Gesamtgewicht der Siegelschicht, aufweist. Die vorliegende Erfindung betrifft weiterhin die Herstellung sowie die Verwendung dieser Folie zur Versiegelung von Artikeln, vorzugsweise zur Verpackung von Waren, insbesondere von Lebensmitteln. Die vorliegende Erfindung betrifft weiterhin einen Artikel, vorzugsweise eine Verpackung, insbesondere Lebensmittelverpackung, umfassend einen Grundkörper, beispielsweise eine Verpackungsschale, mit einer Öffnung und eine die Öffnung des Grundkörpers verschliessende erfindungsgemässe Folie.

## Beschreibung

Die vorliegende Erfindung betrifft eine peelfähige Folie, welche sich insbesondere als Verpackungsmaterial für beispielsweise Lebensmittel, insbesondere als Deckelfolie für Schalen aus Polypropylen (PP) eignet.

Moderne Verpackungen müssen heutzutage mehrere Funktionen wie Barriereeigenschaften gegen Sauerstoff oder speziell definierte Siegeleigenschaften erfüllen. Um diese Eigenschaftsprofile zu erreichen, greift man auf die Mehrschichttechnologie zurück. Im Blasextrusionsverfahren werden bei der Mehrschichttechnologie mehrere Schichten gleichzeitig extrudiert und in heissem Zustand in der Düse zu einer einzigen Folie vereinigt. Jede dieser Schichten kann dabei eine bestimmte Funktion erfüllen.

Eine Anforderung an Verpackungen besteht darin, dass sie vom Verbraucher möglichst einfach geöffnet werden können soll. Hierfür können bestimmte Öffnungshilfen wie Stanzungen und Laserperforationen bereitgestellt werden. Viele Verpackungen sind auch mit "peelfähigen" Folien (d.h. dicht versiegelnden, aber vergleichsweise leicht abziehbaren Folien) ausgestattet. Diese Verpackungen lassen sich mit relativ wenig Kraftaufwand an der Siegellasche öffnen. Dabei ist die Versiegelung so gestaltet, dass sie nach wie vor dicht ist, aber mit geringem Kraftaufwand wieder gelöst werden kann.

Im Stand der Technik sind Peelfolien bekannt, die gute Siegeleigenschaften aufweisen, wenn sie auf Polyethylen (PE) aufgebracht werden. Unterschalen für z.B. Fleischverpackungen sind aber meist aus Polypropylen (PP) oder aus a-PET (amorphem Polyethylenterephthalat), bei Lebensmitteln, die auch noch in der Verpackung erhitzt werden müssen, auch aus c-PET (kristallinem Polyethylenterephthalat) gefertigt. Für diese Materialien gibt es auf dem Markt kein funktionierendes Peel-Siegelsystem, das auf einer Folienlösung beruht. Bis jetzt müssen die (Unter-)Schalen mit dem Siegelmedium (PE) nochmals zusätzlich kaschiert oder in einem Coextrusionsverfahren coextrudiert werden, damit die Oberbahn mit einem PE-Peelmedium in der Innenschicht (Siegelschicht) versiegelt werden kann. Allerdings ist PE als Siegelmedium für Anwendungen mit höherer Temperaturbelastung nicht das Siegelmedium der Wahl, da es zu früh erweicht.

Eine andere Möglichkeit, auf derartige Verpackungsmaterialien eine peelfähige Folie aufzubringen, besteht darin, auf das Material vorgängig eine Beschichtung mit einem Siegellack aufzubringen. Dies stellt aber einen zusätzlichen Arbeitsschritt dar und verteuert deshalb die Materialien entsprechend.

Zusätzlich zur Ausstattung der Verpackung mit einer peelfähigen Folie werden vom Endkunden heutzutage meist noch weitere Zusatzfunktionen gefordert. So verlangt eine ansprechende Produktpräsentation heutzutage eine ungetrübte Sicht auf das Produkt. Feuchte Produkte wie Fleisch führen aber in der Kühltruhe (bei etwa 0.5 bis 8°C) zum Beschlagen (Fogging) der Folie, was vom Kunden nicht mehr akzeptiert wird. Deshalb versucht man auf der Siegelseite der Folien diesem nachteiligen Effekt mit sogenannten Antifog-Additiven entgegenzuwirken. Die Antifog-Additive migrieren dabei auf die Oberfläche der Folie und erhöhen dort die Oberflächenspannung, so dass ein gebildeter Kondenstropfen auf der Folie eher spreitet und damit die Sicht auf das Produkt frei bleibt.

Die bekannten Antifog-Additive verändern aber häufig die Siegeleigenschaften der Folie. Je nach Folienaufbau kann es eher zu einer Migration der Antifog-Additive in die Folie als an die Oberfläche der Folie kommen, wodurch die gewünschte Wirkung der Verhinderung eines Beschlags auf der Verpackung nicht erreicht wird.

Bislang konnte noch keine gegenüber PP peelfähige Verpackungsfolie realisiert werden, bei welcher ein Antifog-Additiv in die Siegelschicht der Folie eingebracht werden kann. Vielmehr muss das Antifog-Additiv bislang über eine Lackierung oder Bedruckung in einem weiteren Arbeitsgang nochmals separat auf die Folie aufgebracht werden, was diese Folien zusätzlich verteuert.

In einem von starkem Preisdruck getriebenen Markt wie dem Verpackungsmarkt würde die Einsparung eines solchen Arbeitsganges einen deutlichen Preisvorteil und damit auch Marktvorteil bedeuten.

Eine weitere Anforderung an Verpackungsfolien besteht in der Bereitstellung einer Barrierefunktion, um den Kontakt der verpackten Ware mit externer Umgebung (Flüssigkeit, Sauerstoff usw.) zu verhindern.

Bei dem Versuch, eine Folie mit dem erforderlichen Anforderungsprofil mit Hilfe der vorstehend genannten Mehrschichttechnologie bereitzustellen, stellt sich zusätzlich das Problem einer möglichen Delamination der einzelnen Folienschichten voneinander (Verbundhaftungsproblem). Damit zusammenhängend ergibt sich beim Abziehen der verschweissten Folie kein sauberes Bruchbild (Weissbruch), sondern die Folie löst sich fadenartig von der Versiegelung (Angel hairs). Dies wird vom Kunden nicht akzeptiert.

Die Aufgabe der vorliegenden Erfindung bestand darin, eine peelfähige Folie bereitzustellen, welche zur Versiegelung von Verpackungsschalen aus PP geeignet ist und die Anforderungen an Barriereeigenschaften, Verbundhaftung und Antifog-Eigenschaften zufriedenstellend erfüllt.

Die vorstehende Aufgabe wird erfindungsgemäss gelöst durch ein Antifog-Material gemäss Anspruch 1 sowie eine dieses Antifog-Material enthaltende Folie gemäss Anspruch 3.

Es wurde erfindungsgemäss gefunden, dass eine Folie, welche das vorstehende Anforderungsprofil zufriedenstellend erfüllt, neben einer Barriereschicht eine besondere Siegelschicht aufweisen muss. Diese Siegelschicht muss zur Vermeidung von Verbundhaftungsproblemen einen Anteil an Polypropylen von 50 bis 80 Gew.-%, vorzugsweise 50 bis 70 Gew.-%, bezogen auf das Gesamtgewicht der Siegelschicht, aufweisen. Es hat sich jedoch gezeigt, dass herkömmliche Antifog-Materialien in einer Siegelschicht mit erhöhtem Anteil an Polypropylen nicht mehr ausreichend zur Oberfläche migrieren und der gewünschte Antifog-Effekt nicht mehr zufriedenstellend erreicht wird. Erfindungsgemäss wurde gefunden, dass mit einem neuartigen Antifog-Material auch in einer Siegelschicht mit erhöhtem Anteil an Polypropylen der gewünschte Antifog-Effekt erzielt werden kann.

Gemäss der vorliegenden Erfindung werden unter dem Begriff "Polypropylen" sowohl Polypropylenhomopolymere als auch Copolymere von Polypropylen mit ungeordneten Anteilen (d.h. weniger als 10%, vorzugsweise weniger als 5%) an C2-C10-Alkenen oder deren Mischungen verstanden. Die Copolymere können hierbei Block- oder Random-Copolymere sein.

Gemäss der vorliegenden Erfindung sind Prozentangaben von Bestandteilen einer Schicht oder Zusammensetzung derart zu verstehen, dass ihre Summe 100% ergibt.

Das neuartige Antifog-Material umfasst mindestens eine Substanz mit Antifog-Eigenschaften und ein Polyethylen, vorzugsweise mit einer Schmelzflussrate (MFR) im Bereich von 3 bis 10 g/10 Minuten, vorzugsweise 4 bis 9 g/10 Minuten.

Die Schmelzflussrate (MFR), auch als Schmelzflussindex bezeichnet, wird gemäss DIN EN ISO 1133 mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen bzw. die austretende Masse der Polymerschmelze (des sogenannten Extrudats) als Funktion der Zeit. Schmelzflusswerte werden in g/10 Minuten berechnet. Eine typische Auflagelast ist 21.6 N für Polyethylen oder Polypropylen. Die Bestimmung wird für Polyethylen typischerweise bei 190°C und für Polypropylen typischerweise bei 230°C durchgeführt.

Das Polyethylen, dient als Träger für die den eigentlichen Antifog-Effekt bereitstellende Substanz oder Substanzen. Es hat sich erfindungsgemäss gezeigt, dass durch den Polyolefin-Träger die Migrationseigenschaften des Antifog-Materials derart beeinflusst werden, dass er auch in einer Siegelschicht mit erhöhtem Anteil an Polypropylen ein ausreichendes Migrationsverhalten zeigt.

Substanzen mit Antifog-Eigenschaften sind hinlänglich bekannt. Es handelt sich üblicherweise um oberflächenaktive Substanzen, welche den Kontaktwinkel der Folienoberfläche verringern und somit deren Oberflächenspannung herabsetzen. Dies führt zur Ausbildung eines gleichförmigen, dünnen, transparenten Wasserfilms auf der Oberfläche und verhindert somit eine Eintrübung aufgrund grösserer Wassertropfen. Beispielhaft seien Glycerylester von Fettsäuren, alkoxylierte Alkylphenole, polyalkoxylierte Fettsäureester, mehrwertige Alkohole, mono- oder dialkoxylierte Amine oder ein mit aliphatischem Kohlenwasserstoff substituiertes 2,2'-Iminobisethanol oder Gemische davon genannt. Derartige Antifog-Substanzen sind beispielsweise in der US-3,048,263 A, EP 0 254 236 A1, WO 98/03296 A1, WO 98/44030 A1, WO 97/13640 A1 oder WO 2008/019822 A2 beschrieben.

Erfindungsgemäss wird unter einem Antifog-Material ein Konzentrat, insbesondere ein Granulat, aus mindestens einer Substanz mit Antifog-Eigenschaften und Polyethylen verstanden. Vorzugsweise handelt es sich bei dem Konzentrat um ein Granulat, das beispielsweise mit einem Schneckenextruder aus den einzelnen Komponenten hergestellt werden kann.

Erfindungsgemäss enthält das Antifog-Material vorzugsweise 5 bis 30 Gew.-%, vorzugsweise 10 bis 20 Gew.-% und besonders bevorzugt 12 bis 18 Gew.-%, bezogen auf das Gesamtgewicht des Antifog-Materials, an mindestens einer Substanz mit Antifog-Eigenschaften. Diese Menge ist zur Gewährleistung ausreichender Antifog-Wirkung erforderlich.

Erfindungsgemäss enthält das Antifog-Material vorzugsweise 15 bis 50 Gew.-%, vorzugsweise 20 bis 40 Gew.-% und besonders bevorzugt 20 bis 30 Gew.-%, bezogen auf das Gesamtgewicht des Antifog-Materials, an dem Polyethylen.

Die erfindungsgemässe Folie zeichnet sich durch eine geringe Dicke von 30 bis 65 µm, vorzugsweise von 30 bis 50 µm, besonders bevorzugt von 40 µm aus. Durch die erfindungsgemäss bereitgestellte Möglichkeit, eine sehr dünne Folie mit den erforderlichen Eigenschaften bereitstellen zu können, ergeben sich erhebliche Einsparungen bei den Materialkosten. Die Dicke der Folie wird gemäss DIN 53370 bei 23°C und 50% RH bestimmt.

Die erfindungsgemässe Folie umfasst als wesentlichen Bestandteil eine besondere Siegelschicht. Diese Siegelschicht weist einen Anteil an Polypropylen von 50 bis 80 Gew.-%, vorzugsweise 50 bis 70 Gew.-%, bezogen auf das Gesamtgewicht der Siegelschicht, auf. Wie vorstehend ausgeführt ist dieser hohe Anteil an Polypropylen erforderlich, um Verbundhaftungsprobleme zu vermeiden. Es hat sich gezeigt, dass bei einem geringeren Anteil an Polypropylen in der Siegelschicht eine Delamination der Siegelschicht zur benachbarten Schicht in der Folie auftritt, wenn die Folie von einem Substrat wie einer Verpackungsschale abgezogen wird.

Erfindungsgemäss können alle Polypropylenhomopolymere oder - copolymere in der Siegelschicht eingesetzt werden, die herkömmlicherweise in Verpackungsfolien eingesetzt werden. Erfindungsgemäss bevorzugt sind hochkristalline heterophasische Polypropylen-Copolymere, wie sie unter dem Handelsnamen Borpact^{®} von der Firma Borealis verkauft werden. Beispielhaft sei das PP-PE-Copolymer Borpact^{®} BC918CF genannt.

In der erfindungsgemässen Siegelschicht ist das erfindungsgemässe Antifog-Material vorzugsweise in einer Menge von 20 bis 40 Gew.-%, besonders bevorzugt 20 bis 30 Gew.-%, bezogen auf das Gesamtgewicht der Siegelschicht, enthalten.

Die erfindungsgemässe Siegelschicht kann zusätzliche Polymerkomponenten enthalten. Vorzugsweise wird als zusätzliches Polymer ein Ethylen-α-Olefin-Copolymer verwendet, wenngleich auch beispielsweise Ethylen-Homopolymer als auch Ethylen-Propylen-Copolymere verwendet werden können. Beispielhaft seien Ethylen-α-Olefin-Copolymere genannt, wie sie von der Firma Mitsui unter dem Handelsnamen Tafmer^{®} vertrieben werden. Bevorzugt sei Tafmer A-4085 S genannt. Gemäss einer weiteren Ausführungsform der vorliegenden Erfindung kann der Siegelschicht darüber hinaus auch ein Polyethylen mit geringer Dichte (LDPE) zugesetzt werden. Polyethylene mit geringer Dichte (LDPE) sind dem Fachmann bekannt. Es handelt sich um thermoplastische Homopolymere des Ethylens. Erfindungsgemässe LDPE zeichnet sich durch eine Dichte im Bereich von etwa 0.919-0.932 g/cm³ aus. Erfindungsgemäss können herkömmlich bei der Folienherstellung verwendete LDPEs eingesetzt werden. Beispielhaft sei das Handelsprodukt Sabic 2404 TN 00/NC296 der Firma Saudi Basic Industries Corporation erwähnt.

In der erfindungsgemässen Siegelschicht sind die zusätzlichen Polymere, sofern vorhanden, vorzugsweise in einer Menge von 0 bis 30 Gew.-%, besonders bevorzugt 5 bis 25 Gew.-%, bezogen auf das Gesamtgewicht der Siegelschicht, enthalten.

Die erfindungsgemässe Siegelschicht kann weiterhin bei der Folienherstellung üblicherweise verwendete Zusatzstoffe aufweisen, beispielsweise Gleitmittel, Füllstoffe, Antiblockmittel, Antistatikstoffe, oder Farbstoffe. Die Zusatzstoffe sind erfindungsgemäss bevorzugt in einer Menge von 10 bis 0 Gew.-%, vorzugsweise 5 bis 0 Gew.-%, bezogen auf das Gesamtgewicht der Siegelschicht, enthalten.

Die erfindungsgemässe Siegelschicht weist vorzugsweise eine Dicke von 5 bis 30 µm, bevorzugter von 10 bis 20 µm, noch bevorzugter von 12 bis 18 µm und besonders bevorzugt von 16 µm auf.

Gemäss einer Ausführungsform A der vorliegenden Erfindung umfasst die Folie neben der vorstehend beschriebenen Siegelschicht eine einzige weitere Schicht aus einem im vorliegenden technischen Gebiet herkömmlich eingesetzten Polymermaterial, vorzugsweise Polyethylenterephthalat (PET). Bei dieser Ausführungsform wird die Siegelschicht auf herkömmliche Weise, beispielsweise mit einem Extruder, hergestellt und anschliessend auf bekannte Weise (vorzugsweise lösungsmittelfrei) gegen die weitere Schicht aus vorzugsweise PET kaschiert. Das so hergestellte Laminat aus zwei Schichten weist aufgrund der weiteren Schicht aus vorzugsweise PET Barriereeigenschaften auf. Die weitere Schicht aus vorzugsweise PET weist vorzugsweise eine Dicke von 10 bis 30 µm, bevorzugter von 10 bis 25 µm auf.

Gemäss einer weiteren Ausführungsform B der vorliegenden Erfindung umfasst die Folie neben der vorstehend beschriebenen Siegelschicht und der vorstehend beschriebenen weiteren Schicht aus vorzugsweise PET noch zwei zusätzliche Schichten auf. Derartige zusätzliche Schichten für Mehrschichtfolien sind dem Fachmann grundsätzlich bekannt und sind in der Regel aus thermoplastischen Polymeren oder Gemischen derselben aufgebaut. Beispiele für derartige thermoplastische Polymere sind Polyolefine, Polyamide, Polyester, Polystyrole, Polyoxyalkylene, Polyvinylchlorid, Polyethersulfone, Polyurethane, Polyethylen-oder Polybutylenterephthalat, Polyimide, Polyetherketone, oder Polycarbonat. Bevorzugt werden Polyolefine, besonders bevorzugt Polypropylene (PP) als Material für die zusätzlichen Schichten verwendet. Jede erfindungsgemässe zusätzliche Schicht weist vorzugsweise eine Dicke von jeweils 1 bis 5 µm, bevorzugter von 2.5 µm oder 4 µm auf. Bei dieser Ausführungsform ist die weitere Schicht aus vorzugsweise PET gegen die Siegelschicht kaschiert, während die zusätzlichen Schichten auf der anderen Oberfläche der Siegelschicht angeordnet sind.

Die erfindungsgemässe Folie umfasst gemäss einer weiteren Ausführungsform C eine Deckschicht, auch als Trägerschicht bezeichnet. Die Deckschicht ist die Aussenschicht der Folie, auf der von der Siegelschicht abgewandten Seite. Deckschichten von Mehrschichtfolien sind dem Fachmann grundsätzlich bekannt und sind in der Regel aus thermoplastischen Polymeren oder Gemischen derselben aufgebaut. Beispiele für derartige thermoplastische Polymere sind Polyolefine, Polyamide, Polyester, Polystyrole, Polyoxyalkylene, Polyvinylchlorid, Polyethersulfone, Polyurethane, Polyethylen- oder Polybutylenterephthalat, Polyimide, Polyetherketone, oder Polycarbonat. Bevorzugt werden Polyolefine, besonders bevorzugt Polypropylen (PP) oder Polyethylen (PE) als Deckschicht verwendet.

Es hat sich erfindungsgemäss herausgestellt, dass die Verbundhaftung der Folie gemäss der Ausführungsform C zusätzlich verbessert werden kann, wenn die Deckschicht aus einer Mischung aus einem Ethylen-α-Olefin-Copolymer und einem Polyethylen geringer Dichte (LDPE) aufgebaut ist.

Beispielhaft seien für diese bevorzugte Ausführungsform der Deckschicht Copolymere aus Ethylen und langkettigen α-Olefinen mit einer Kettenlänge von C4 bis C20, wie beispielsweise 1-Hexen, 1-Hepten, 1-Octen oder 1-Nonen genannt. Erfindungsgemäss besonders bevorzugt ist ein Copolymer aus Ethylen und 1-Octen. Derartige Copolymere und ihre Herstellung sind bekannt. Polyethylen und Copolymere von Ethylen und α-Olefinen werden üblicherweise katalytisch in Gegenwart geeigneter Polymerisationskatalysatoren hergestellt. Beispielhaft seien Ziegler-Natta-Katalysatoren, Metallocen-Katalysatoren oder Post-Metallocen-Katalysatoren genannt, wie sie dem Fachmann bekannt sind. Beispielhafte Post-Metallocen-Katalysatoren sind in der EP-0 416 815 A2 beschrieben (Polymerisationskatalysatoren mit gespannter Geometrie, beispielsweise Katalysatoren mit verbrückten Amido-Cyclopentadienyl-Liganden wie CBT (Dimethylsilyl(tetramethylcyclopentadienyl)-t-butyldimethylamido-titan(IV)-dichlorid)). Mit Hilfe dieser bekanten Katalysatoren können Copolymere von Ethylen und α-Olefinen mit massgeschneiderter Struktur und gewünschten Eigenschaften bereitgestellt werden. Insbesondere lässt sich die Menge an in das Polymer eingebautem α-Olefin, die Molekulargewichtsverteilung und die Polymerstruktur genau einstellen. Erfindungsgemäss geeignet sind beispielsweise die Copolymere der Elite^{®}-Reihe, vorzugsweise der Elite^{®} AT-Reihe, der Firma Dow Chemical. Beispielhaft sei das Copolymer Elite AT 6101 der Firma Dow Chemical genannt.

Polyethylene mit geringer Dichte (LDPE) gemäss der Ausführungsform C sind dem Fachmann bekannt. Es handelt sich um thermoplastische Homopolymere des Ethylens. Erfindungsgemässe LDPE zeichnet sich durch eine Dichte im Bereich von etwa 0.919-0.932 g/cm³ aus. Erfindungsgemäss können gemäss der Ausführungsform C herkömmlich bei der Folienherstellung verwendete LDPEs eingesetzt werden. Beispielhaft sei das Handelsprodukt Lupolen 2420F der Firma Lyondell-Basell erwähnt. Bei dieser Ausführungsform ist eine Mischung aus 70 bis 90 Gew.-% Ethylen-α-Olefin-Copolymer und 10 bis 30 Gew.-% Polyethylen geringer Dichte (LDPE), bezogen auf das Gesamtgewicht der Deckschicht, bevorzugt.

Die erfindungsgemässe Deckschicht kann weiterhin bei der Folienherstellung üblicherweise verwendete Zusatzstoffe aufweisen, beispielsweise Gleitmittel, Füllstoffe, Antiblockmittel, Antistatikstoffe, oder Farbstoffe. Die Zusatzstoffe sind erfindungsgemäss bevorzugt in einer Menge von 10 bis 0 Gew.-%, vorzugsweise 5 bis 0 Gew.-%, bezogen auf das Gesamtgewicht der Deckschicht, enthalten.

Die erfindungsgemässe Deckschicht weist vorzugsweise eine Dicke von 5 bis 20 µm, bevorzugter von 5 bis 15 µm, besonders bevorzugt von 10 µm auf.

Die erfindungsgemässe Folie gemäss der Ausführungsform C weist weiterhin eine Barriereschicht auf, um den Inhalt einer mit der Folie versiegelten Verpackung gegen die Umgebung abzuschirmen. Insbesondere verhindert die erfindungsgemässe Barriereschicht den Durchtritt von Sauerstoff durch die erfindungsgemässe Folie. Barriereschichten für Mehrschichtfolien sind dem Fachmann hinlänglich bekannt und sind üblicherweise aus Polyamid, Polyethylenterephthalat, oder Ethylenvinylalkohol-Copolymer oder Gemischen dieser Polymere aufgebaut.

Die Barriereschicht ist in der erfindungsgemässen Folie zwischen der Deckschicht und der Siegelschicht angeordnet, wobei sich jeweils zwischen Deckschicht und Barriereschicht sowie Siegelschicht und Barriereschicht zusätzliche Schichten befinden können.

Die erfindungsgemässe Barriereschicht weist vorzugsweise eine Dicke von 1 bis 5 µm, bevorzugter von 1 bis 3 µm, besonders bevorzugt von 2.5 µm auf.

Eine bevorzugte Ausführungsform der vorliegenden Erfindung gemäss der Ausführungsform C zeichnet sich dadurch aus, dass die Folie zusätzlich zwei die Barriereschicht einschliessende Haftvermittlerschichten umfasst.

Haftvermittlerschichten für Mehrschichtfolien sind dem Fachmann hinlänglich bekannt und sind üblicherweise aus mit funktionellen Gruppen modifizierten Polymeren aufgebaut, wobei durch die funktionellen Gruppen gute Adhäsiveigenschaften bereitgestellt werden. Für eine gute Haftung an der erfindungsgemässen Barriereschicht kann vorzugsweise modifiziertes Polyethylen oder Polypropylen eingesetzt werden, wie es von der Firma Mitsui unter dem Handelsnamen Admer^{®} vertrieben wird. Besonders bevorzugt ist erfindungsgemäss Anhydrid-modifiziertes PP, wie es von der Firma Mitsui unter dem Handelsnamen Admer^{®} QF 551 E vertrieben wird.

Auch wenn erfindungsgemäss die Haftvermittlerschichten nicht identisch sein müssen, ist der Einsatz von zwei identisch aufgebauten Haftvermittlerschichten bevorzugt.

Jede erfindungsgemässe Haftvermittlerschicht weist vorzugsweise eine Dicke von jeweils 1 bis 5 µm, bevorzugter von 1 bis 3 µm, besonders bevorzugt von 2.5 µm auf.

Gemäss einer Variante der Ausführungsform C weist die erfindungsgemässe Mehrschichtfolie einen 5-Schicht-Aufbau aus Deckschicht, Haftvermittlerschicht, Barriereschicht, Haftvermittlerschicht und Siegelschicht in dieser Reihenfolge auf.

Gemäss einer weiteren Variante der Ausführungsform C der vorliegenden Erfindung kann die Folie aber noch weitere Schichten aufweisen, vorzugsweise zwei oder 4 zusätzliche Schichten (wodurch sich ein 7-Schicht-Aufbau oder ein 9-Schicht-Aufbau ergibt, wobei ein 7-Schicht-Aufbau bevorzugt ist). Diese Schichten können entweder zwischen Deckschicht und einer Haftvermittlerschicht, zwischen Siegelschicht und einer Haftvermittlerschicht oder sowohl zwischen Deckschicht und einer Haftvermittlerschicht und zwischen Siegelschicht und einer Haftvermittlerschicht angeordnet sein.

Derartige zusätzliche Schichten für Mehrschichtfolien sind dem Fachmann grundsätzlich bekannt und sind in der Regel aus thermoplastischen Polymeren oder Gemischen derselben aufgebaut. Beispiele für derartige thermoplastische Polymere sind Polyolefine, Polyamide, Polyester, Polystyrole, Polyoxyalkylene, Polyvinylchlorid, Polyethersulfone, Polyurethane, Polyethylen- oder Polybutylenterephthalat, Polyimide, Polyetherketone, oder Polycarbonat. Bevorzugt werden Polyolefine, besonders bevorzugt Polypropylene (PP) als Material für die zusätzlichen Schichten verwendet.

Jede erfindungsgemässe zusätzliche Schicht weist vorzugsweise eine Dicke von jeweils 1 bis 5 µm, bevorzugter von 2.5 µm oder 4 µm auf.

Die erfindungsgemässe Folie kann auf bekannte Weise hergestellt werden. Beispielhaft und als bevorzugte Ausführungsform sei das Blasextrusionsverfahren genannt. Beim Blasextrusionsverfahren, welches dem Fachmann grundsätzlich bekannt ist, wird das entsprechende Ausgangsmaterial vorzugsweise als Granulat über eine Dosiervorrichtung in einen Extruder eingeführt. Dieser besteht beispielsweise im Wesentlichen aus einem beheizbaren Metallzylinder, in dem sich die Plastifizierschnecke dreht. Die Aufgabe der Schnecke ist es, das Kunststoffgranulat bzw. die stromabwärts entstehende Schmelze zu fördern, das Material über Scherung (Reibung) aufzuschmelzen und zu homogenisieren sowie den Druck aufzubauen, der notwendig ist, um die Schmelze durch den engen Werkzeugspalt zu drücken. Im Einzugsbereich wird das Kunststoffgranulat über einen Trichter auf die Schnecke aufgegeben, im weiteren Verlauf der Förderung durch den Extruder aufgeschmolzen und gemischt. Je nach Ausführung der Anlage und verarbeitetem Material entstehen direkt vor der Schneckenspitze Drücke von etwa 600 bar. Gängige Verarbeitungstemperaturen reichen von 150 °C (LDPE) bis ca. 250 °C (HDPE). Durchsätze betragen je nach Extrudergrösse üblicherweise 5 kg/h bis 1500 kg/h. Ein Extruder mit beispielsweise einem Schneckendurchmesser von 60 mm und einer Schneckendrehzahl von 200/min erreicht bei LDPE einen Durchsatz von etwa 200 kg/h (Förderrate 1 → 1 kg pro Umdrehung und Stunde).

Nach dem Extruder wird die Schmelze durch ein Werkzeug mit Ringdüse gedrückt. Um sehr breite und schlauchförmige Folien herzustellen, wird auf sogenannten Blasfolienanlagen durch einen Umlenkkopf ein Schlauch senkrecht nach oben aus dem Extruder geführt. Durch Luftzufuhr in das Innere der Schlauchfolie wird diese auf das gewünschte Mass aufgeblasen und über einen Kühlring mit Luft von außen gekühlt. Bei grossen Anlagen wird der Schlauch gleichzeitig von innen gekühlt, d.h. es findet ein Luftaustausch im Inneren der Blase statt. Im unteren Bereich strömt kalte Kühlluft in die Blase, die mittlerweile erwärmte Luft wird nach einer bestimmten Strecke, beispielsweise ca. 4m, oben durch ein Rohr in der Blase abgesaugt. Hierbei kann die Regelung der Kühlzu- und Abluft durch Ultraschallsensoren geregelt werden, die den Durchmesser der Blase konstant halten. Zur Stabilisierung der Blase kann ein Kalibrierkorb mit Teflon- oder Filzröllchen, der die Blase einklemmt, herangezogen werden. Die Blasenform (konventionelle Fahrweise oder langer Hals) kann durch Material, Werkzeug und Kühlung bestimmt werden.

Am oberen Ende der Anlage wird der nun hinreichend abgekühlte Schlauch zusammengefaltet (je nach zu verarbeitendem Material beispielsweise mit Hilfe von Holzlatten oder Rollen) und über Umlenkwalzen bis zum Wickler geführt. Zwischen Kühlring und Flachlegeeinrichtung kann ein so genannter Kalibrierkorb geschaltet werden, mit welchem der Umfang der Blase definiert und die Folienblase stabilisiert werden kann. Durch die Abzugsgeschwindigkeit wird die Dicke der Folie festgelegt. Die endgültige Folienstärke wird noch im thermoplastischen Bereich des Kunststoffes bestimmt (unterhalb des Kalibrierkorbes).Im Regelfall wird der flachgelegte Folienschlauch mittels Schneidwerkzeugen wie Rasierklingen an den Rändern beschnitten und die zwei entstehenden Folienbahnen auf zwei Wickelstellen getrennt gewickelt. Es gibt je nach Wicklerkonfiguration folgende Wickelmöglichkeiten: Kontakt, Spalt und Zentral. Im Anschluss daran kann man die Folienrollen z.B. als Beutel, als Laminierfolie oder auch als Folie zum Bedrucken im Flexo- oder Tiefdruckverfahren verwenden. Blasfolienanlagen können eine Höhe von über 15 m erreichen. Mit Hilfe des Blasextrusionsverfahrens kann eine aus mehreren Schichten bestehende Folie hergestellt werden.

Gemäss einem alternativen Herstellungsverfahren (Castfilm-Verfahren) wird das entsprechende Ausgangsmaterial vorzugsweise als Granulat über eine Dosiervorrichtung in einen Extruder eingeführt, im Extruder geschmolzen und, gegebenenfalls nach Führung durch ein Sieb durch eine Flachfoliendüse ausgeführt. Anschliessend wird die Schmelze auf einer gekühlten Walze abgeschreckt. Die so erhaltene Folie wird auf einer Rolle aufgewickelt. Mit Hilfe des Cast film-Verfahrens kann bei analoger Coextrusion wie vorstehend beim Blasextrusionsverfahren beschrieben eine aus mehreren (bis zu 9) Schichten bestehende Folie hergestellt werden.

Gemäss einer Ausführungsform der vorliegenden Erfindung kann die Folie gemäss Ausführungsform C gegen eine weitere Schicht aus einem im vorliegenden technischen Gebiet herkömmlich eingesetzten Polymermaterial, vorzugsweise Polyethylenterephthalat (PET), kaschiert werden. Bei dieser Ausführungsform wird die Mehrschichtfolie wie vorstehend beschrieben hergestellt und anschliessend auf bekannte Weise (vorzugsweise lösungsmittelfrei) gegen die weitere Schicht aus vorzugsweise PET kaschiert. Die weitere Schicht aus vorzugsweise PET weist vorzugsweise eine Dicke von 10 bis 30 µm, bevorzugter von 10 bis 25 µm auf.

Bei Bedarf kann die Folie anschliessend noch bearbeitet werden, beispielsweise durch monoaxiale Reckung oder biaxiale Reckung orientiert werden.

Die erfindungsgemässe Folie ist sehr gut bedruckbar mit herkömmlichen in diesem technischen Gebiet eingesetzten Druckverfahren. Beispielhaft sei das Flexodruckverfahren genannt.

Das erfindungsgemässe Antifog-Material ist besonders für den Einsatz in einer Schicht mit hohem Polypropylengehalt vorgesehen, da er in einer solchen Schicht im Gegensatz zu herkömmlichen Antifog-Mitteln eine gute Migration zur Oberfläche zeigt und somit für einen zufriedenstellenden Antifog-Effekt sorgt. Grundsätzlich kann das erfindungsgemässe Antifog-Material aber auch in anderen Substraten, beispielsweise anderen Verpackungsfolien eingesetzt werden. Die vorliegende Erfindung betrifft somit auch die Verwendung eines hier beschriebenen Antifog-Materials in einer Folie, vorzugsweise in einer hier beschriebenen Folie.

Die erfindungsgemässe Folie kann zur Versiegelung von Artikeln eingesetzt werden, welche mindestens eine zu versiegelnde Öffnung aufweisen. Vorzugsweise handelt es sich bei den Artikeln um Verpackungen, insbesondere um Lebensmittelverpackungen. Die vorliegende Erfindung betrifft somit auch die Verwendung einer hier beschriebenen Folie zur Versiegelung von Artikeln, vorzugsweise zur Verpackung von Waren, insbesondere von Lebensmitteln.

Die erfindungsgemässe Folie eignet sich besonders zur Versiegelung von Artikeln, welche aus Polypropylen gefertigt sind, da die Folie versiegelnd auf diese Materialien aufgebracht und einfach von diesen wieder abgezogen werden kann, d.h. auf diesen Materialien peelfähig ist.

Die vorliegende Erfindung betrifft somit auch einen Artikel, vorzugsweise eine Verpackung, insbesondere eine Lebensmittelverpackung, umfassend einen Grundkörper, beispielsweise eine Verpackungsschale, mit einer Öffnung und eine die Öffnung des Grundkörpers verschliessende, hier beschriebene Folie.

Verpackungen und insbesondere Lebensmittelverpackungen sind dem Fachmann hinlänglich bekannt. Erfindungsgemäss wird unter einer Verpackung ein Artikel verstanden, in dessen Grundkörper ein Hohlraum zur Aufnahme eines Gegenstands vorhanden ist. Gegenstand der vorliegenden Erfindung sind Artikel und insbesondere Verpackungen, die mindestens eine Öffnung aufweisen, beispielsweise eine offene Fläche oder Seite. Durch diese Öffnung kann ein im Hohlraum des Artikels enthaltener Gegenstand von aussen betrachtet werden. Diese Öffnung wird mit Hilfe der hier beschriebenen erfindungsgemässen Folie verschlossen.

Gemäss einer bevorzugten Ausführungsform der vorliegenden Erfindung handelt es sich bei dem Artikel um eine Lebensmittelverpackung, beispielsweise zur Aufnahme von Fleischprodukten, Fertiggerichten, Obst, Pilzen, usw. Die Vorteile der erfindungsgemässen Folie kommen insbesondere bei gekühlt zu lagernden Artikeln zum Tragen, da dort eine Antifog-Eigenschaft gefordert wird.

Lebensmittelverpackungen sind üblicherweise aus einer Schale als Grundkörper aufgebaut, in welcher das Lebensmittel aufbewahrt wird. Diese Schale kann mit der erfindungsgemässen Folie versiegelt werden. Gemäss der vorliegenden Erfindung handelt es sich bevorzugt um Grundkörper (Schalen) aus Polypropylen. Die erfindungsgemässe Folie ist auf diesen Materialien peelfähig. Darunter wird erfindungsgemäss verstanden, dass die Folie mit einem geringen Kraftaufwand von 5-15 N/15 mm (gemäss ISO 527) von dem Grundkörper abgezogen werden kann, ohne dass es hierbei zu Verbundhaftproblemen (Angel hairs usw.) kommt.

Die Herstellung derartiger Artikel, vorzugsweise Verpackungen und insbesondere Lebensmittelverpackungen ist dem Fachmann grundsätzlich bekannt. Die Versiegelung der Artikel erfolgt durch Verschweissen des Grundkörpers mit der erfindungsgemässen Folie bei einer Temperatur im Bereich von 120 bis 240°C, vorzugsweise 140 bis 200°C.

Die vorliegende Erfindung wird nachstehend anhand von nicht einschränkenden Beispielen und Zeichnungen näher erläutert. Es zeigt:

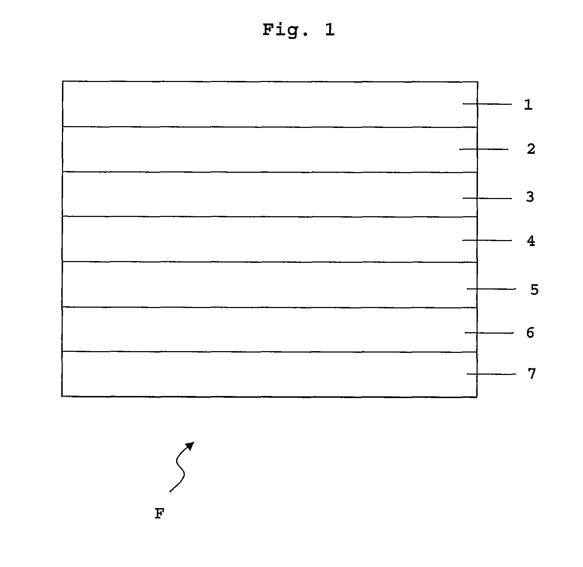

Fig. 1 den schematischen Aufbau einer Ausführungsform der erfindungsgemässen Folie

### Beispiel 1

Die in den Beispielen verwendeten Antifog-Materialien weisen folgenden Aufbau auf:
Constab AF CTB13/017 0252 LD: Constab-Masterbatch AF 0252 LD auf PE-Träger mit MFR=8 g/10 min
Constab AF CTB13/019 0252 LD: Constab-Masterbatch AF 0252 LD auf PE-Träger mit MFR=4 g/10 min

Eine Folie mit der in Fig. 1 gezeigten Struktur wurde hergestellt. Die Folie F umfasst insgesamt 7 Schichten. Die Deckschicht 1 stellt die Aussenseite der Folie F dar und ist mittels einer Haftvermittlerschicht 2 mit einer Barriereschicht 3 verbunden. Nach der Barriereschicht 3 sind eine weitere Haftvermittlerschicht 4 und zwei zusätzlichen Schichten 5, 6 angeordnet. Schliesslich wird die Folie F auf ihrer anderen Aussenseite durch eine Siegelschicht 7 abgeschlossen. Die Schichten weisen folgende Struktur auf:

| **Schicht Nr.** | **Zusammensetzung** | **Gew.-%** | **Dicke (µm)** |
|---|---|---|---|
| 1 | Borpact BC 918 CF | 100% | 10 |
| 2 | Admer QF 551E | 100% | 2.5 |
| 3 | Eval F-171 B (32 mol.-%) | 100% | 2.5 |
| 4 | Admer QF 551E | 100% | 2.5 |
| 5 | Borpact BC 918 CF | 100% | 2.5 |
| 6 | Borpact BC 918 CF | 100% | 4 |
| 7 | Borpact BC 918 CF | 65 | 16 |
| | Tafmer A-4085 S | 10.0 | |
| | Constab AF CTB13/017 0252 LD | 25.0 | |

Die Schichten wurden mittels eines herkömmlichen Blasextrusionsverfahrens zu einer 7-Schichtfolie verarbeitet.

### Beispiel 2

Eine Folie mit der in Fig. 1 gezeigten Struktur wurde analog zu Beispiel 1 mit dem Unterschied hergestellt, dass in der Siegelschicht 7 ein anderes Antifog-Material (Constab AF CTB13/019 0252 LD) eingesetzt wurde.

### Beispiel 3

Eine Folie mit der in Fig. 1 gezeigten Struktur wurde analog zu Beispiel 1 mit dem Unterschied hergestellt, dass die Deckschicht 1 und die Haftermittlerschicht 2 modifiziert wurden. Die Schichten 3 bis 7 sind vom Aufbau her mit den Schichten 3 bis 7 der Folie gemäss Beispiel 1 identisch.

| **Schicht Nr.** | **Zusammensetzung** | **Gew.-%** | **Dicke (µm)** |
|---|---|---|---|
| 1 | Elite AT 6101 | 76% | 10 |
| | Lupolen 2420 F | 20% | |
| | Luvofilm 9407/AMF 705 | 2% | |
| | Polybatch FSU 105 E | 2% | |
| 2 | Admer NF498 E/Orevac 18360 | 100% | 2.5 |
| 3 | Eval F-171 B (32 mol.-%) | 100% | 2.5 |
| 4 | Admer QF 551E | 100% | 2.5 |
| 5 | Borpact BC 918 CF | 100% | 2.5 |
| 6 | Borpact BC 918 CF | 100% | 4 |
| 7 | Borpact BC 918 CF | 65 | 16 |
| | Tafmer A-4085 S | 10.0 | |
| | Constab AF CTB13/017 0252 LD | 25.0 | |

### Beispiel 4

Eine Folie mit der in Fig. 1 gezeigten Struktur wurde analog zu Beispiel 3 mit dem Unterschied hergestellt, dass die Siegelschicht 7 modifiziert wurde. Die Schichten 1 bis 6 sind vom Aufbau her mit den Schichten 1 bis 6 der Folie gemäss Beispiel 3 identisch.

| **Schicht Nr.** | **Zusammensetzung** | **Gew.-%** | **Dicke (µm)** |
|---|---|---|---|
| 1 | Elite AT 6101 | 76% | 10 |
| | Lupolen 2420 F | 20% | |
| | Luvofilm 9407/AMF 705 | 2% | |
| | Polybatch FSU 105 E | 2% | |
| 2 | Admer NF498 E/Orevac 18360 | 100% | 2.5 |
| 3 | Eval F-171 B (32 mol.-%) | 100% | 2.5 |
| 4 | Admer QF 551E | 100% | 2.5 |
| 5 | Borpact BC 918 CF | 100% | 2.5 |
| 6 | Borpact BC 918 CF | 100% | 4 |
| 7 | Borpact BC 918 CF | 60.0 | 16 |
| | Tafmer A-4085 S | 10.0 | |
| | Constab AF CTB13/019 0252 LD | 25.0 | |
| | Sabic 2404 TN00/NC296 | 5.0 | |

### Beispiel 5

Eine Folie mit der in Fig. 1 gezeigten Struktur wurde analog zu Beispiel 3 mit dem Unterschied hergestellt, dass die Siegelschicht 7 modifiziert wurde. Die Schichten 1 bis 6 sind vom Aufbau her mit den Schichten 1 bis 6 der Folie gemäss Beispiel 3 identisch.

| **Schicht Nr.** | **Zusammensetzung** | **Gew.-%** | **Dicke (µm)** |
|---|---|---|---|
| 1 | Elite AT 6101 | 76% | 10 |
| | Lupolen 2420 F | 20% | |
| | Luvofilm 9407/AMF 705 | 2% | |
| | Polybatch FSU 105 E | 2% | |
| 2 | Admer NF498 E/Orevac 18360 | 100% | 2.5 |
| 3 | Eval F-171 B (32 mol.-%) | 100% | 2.5 |
| 4 | Admer QF 551E | 100% | 2.5 |
| 5 | Borpact BC 918 CF | 100% | 2.5 |
| 6 | Borpact BC 918 CF | 100% | 4 |
| 7 | Borpact BC 918 CF | 55.0 | 16 |
| | Tafmer A-4085 S | 10.0 | |
| | Constab AF CTB13/019 0252 LD | 25.0 | |
| | Sabic 2404 TN00/NC296 | 10.0 | |

### Beispiel 6

Eine Folie mit der in Fig. 1 gezeigten Struktur wurde analog zu Beispiel 3 mit dem Unterschied hergestellt, dass die Siegelschicht 7 modifiziert wurde. Die Schichten 1 bis 6 sind vom Aufbau her mit den Schichten 1 bis 6 der Folie gemäss Beispiel 3 identisch.

| **Schicht Nr.** | **Zusammensetzung** | **Gew.-%** | **Dicke (µm)** |
|---|---|---|---|
| 1 | Elite AT 6101 | 76% | 10 |
| | Lupolen 2420 F | 20% | |
| | Luvofilm 9407/AMF 705 | 2% | |
| | Polybatch FSU 105 E | 2% | |
| 2 | Admer NF498 E/Orevac 18360 | 100% | 2.5 |
| 3 | Eval F-171 B (32 mol.-%) | 100% | 2.5 |
| 4 | Admer QF 551E | 100% | 2.5 |
| 5 | Borpact BC 918 CF | 100% | 2.5 |
| 6 | Borpact BC 918 CF | 100% | 4 |
| 7 | Borpact BC 918 CF | 50.0 | 16 |
| | Tafmer A-4085 S | 10.0 | |
| | Constab AF CTB13/019 0252 LD | 25.0 | |
| | Sabic 2404 TN00/NC296 | 15.0 | |

### Untersuchung der Folien gemäss der Beispiele 1 bis 3

### Zugprüfung

Der Zugprügungstest nach DIN EN ISO 527-3 dient zur Bestimmung der Zugeigenschaften von Folien in Längs - Querrichtung und deren Schweissnähte. Der Probekörper (80 x 200 mm Muster, auf 15 mm Breite zugeschnitten, glatte und kerbenfreie Kanten) wird bei konstanter Geschwindigkeit (Zugprüfmaschine Zwick, Einspannlänge 50 mm, Geschwindigkeit 500 mm/min) gedehnt, bis er reisst. Während dieses Vorgangs wird die vom Probekörper getragene Belastung (Kraft) und die Längenänderung (Dehnung) gemessen.

### Weiterreissfestigkeit

Der Weiterreissfestigkeitstest nach DIN 53 363 dient zur Bestimmung der Kraft bzw. des Widerstandes, den eine Folie dem Weiterreissen entgegensetzt. Der mit einem Einschnitt versehene Probekörper (trapezförmig, mit Einschnitt in der Mitte) wird unter festgelegten Bedingungen (Zugprüfmaschine Zwick, Einspannlänge: 60 mm, Prüfgeschwindigkeit: 500 mm/min) gedehnt, dabei wird der Einschnitt weitergerissen. Während dieses Vorgangs wird die Weiterreisskraft/-widerstand gemessen. Daraus kann die Maximalkraft in N (= Weiterreisskraft) entnommen werden. Für den Weiterreisswiderstand (N/mm) ist vorgängig die Dicke nahe am Grund des Einschnittes zu messen. Die Maximalkraft (N) wird dann dividiert durch die Dicke (mm) = Weiterreisswiderstand N/mm (= Weiterreisskraft auf Probendicke bezogen).

Die gemäss den Beispielen 1 bis 3 hergestellten Folien zeigen vergleichbare mechanische Eigenschaften. Die Folie gemäss Beispiel 3 weist aber gegenüber den Folien gemäss der Beispiele 1 und 2 eine erhöhte Weiterreissfestigkeit und eine höhere Verbundhaftung auf.

### Optische Eigenschaften

Der Test dient zur Bestimmung der optischen Eigenschaften von Folien nach ASTM D-1003 und ASTM D-1044. Die Probe (10 cm breiter Streifen, quer zur Extrusionsrichtung der Folie geschnitten) wird senkrecht beleuchtet und das durchgelassene Licht in einer integrierenden Kugel photoelektrisch gemessen. Mit dem Prüfgerät haze-gard plus können drei Messgrössen bestimmt werden:
- Die Trübung (engl. Haze) wird durch Großwinkelstreuung bedingt. Durch Großwinkelstreuung wird Streulicht in alle Richtungen gleichmässig verteilt, wobei auf jeden Raumwinkel nur geringe Streuintensität entfällt. Dies bewirkt eine Verminderung des Kontrastes und ein milchig-trübes Erscheinungsbild. Man unterscheidet *innere Trübung* oder *volumentrübung* durch Inhomogenitäten in der Folie von *Oberflächentrübung* durch Fehler in der Oberfläche. Gemessen wird in Prozent der Teil des durchgelassenen Lichts, der von der Richtung des einfallenden Lichtstrahls infolge von Vorwärtsstreuung mehr als 2,5 % abweicht.
- Als Gesamttransmission (engl. Total Transmittance) wird das Verhältnis des insgesamt durchgelassenen Lichts zur einfallenden Lichtmenge bezeichnet. Sie wird reduziert durch Reflexion und Absorption.
- Die Bildschärfe (engl. Clarity) wird durch Kleinwinkelstreuung bestimmt. Bei Kleinwinkelstreuung wird das Licht nur in kleine Winkel abgelenkt, so dass die Streulichtmenge nur in diesem engen Bereich konzentriert ist. Dadurch werden Konturen verzerrt und erscheinen weniger scharf. Von diesem mit Bildschärfe oder Clarity bezeichneten Effekt hängt es ab, wie gut feine Details als scharf getrennt aufzulösen sind. Ein besonderes Unterscheidungsmerkmal gegenüber der Trübung ist, dass die Bildschärfe mit zunehmendem Abstand zwischen Probe und beobachtetem Objekt abnimmt (Nah- und Ferntransparenz).

Ein Lichtbündel trifft auf die Probe und tritt in eine integrierende Kugel ein. Das von der matt-weißen Beschichtung der Kugelwand gleichmässig verteilte Licht wird von einem Detektor gemessen. Die Gesamttransmission (T) wird bei geschlossenem und die Trübung (H) bei geöffnetem Kugelausgang bestimmt. Ein Ringsensor in der Austrittsöffnung misst die Bildschärfe (C).

Die Resultate sind in nachstehender Tabelle gezeigt:

| Beispiel | Gesamtransmission (%) | Trübung (%) | Bildschärfe (%) |
|---|---|---|---|
| 4 | 89.43 | 8.1 | 80.95 |
| 5 | 89.17 | 9.99 | 76.09 |
| 6 | 89.24 | 11.88 | 70.58 |

Sämtliche Folien zeigen im visuellen Spektralbereich eine hohe optische Transparenz von über 88%.

### Peelverhalten

Die Peelkraft von Verpackungsfolien wird nach der deutschen Norm DIN 55529 "Verpackung - Bestimmung der Siegelnahtfestigkeit von Siegelungen aus flexiblen Packstoffen" bestimmt. Zur Prüfung wird ein 15 mm breiter gesiegelter Folienstreifen rechtwinklig zur Siegelnaht ausgeschnitten. Der Folienstreifen wird in eine Zugprüfmaschine eingespannt. Der Folienstreifen wird mit einer Abzugsgeschwindigkeit von 100 mm/min und einem Abzugswinkel von 90° auseinandergezogen und die Kraft bestimmt, die zum Trennen der Siegelnaht erforderlich ist. Die Peelkraft kann nach ASTM D1876 auch mit unterschiedlichen Abzugswinkeln bestimmt werden

Die Resultate sind in nachstehender Tabelle gezeigt:

| Beispiel | Peelkraft (N/15 mm) bei angegebener Siegeltemperatur | | | | | |
|---|---|---|---|---|---|---|
| | 140°C | 150°C | 160°C | 170°C | 180°C | 190°C |
| 4 | 6.06 | 6.31 | 5.65 | 7.29 | 8.54 | 9.12 |
| 5 | 4.35 | 5.12 | 4.47 | 5.98 | 6.67 | 7.17 |
| 6 | 4.09 | 3.7 | 3.51 | 3.76 | 5.4 | 4.96 |

Sämtliche Folien zeigten gutes Peelverhalten.

### Antifog-Eigenschaften

Der Test dient zur Klassifizierung der Antifogwirkung bei Kühlschranktemperatur (Cold-Fog-Test). Ein mit Wasser gefülltes und mit dem Prüfling (Muster 10 x 10 cm) abgedeckten Becherglas (100 ml, mit 70 - 80 mL Leitungswasser gefüllt) wird im Kühlschrank gelagert. Die zu testende Folie wird so über das Becherglas gespannt und mit einem Gummi fixiert, dass dieses komplett verschlossen ist. Das Becherglas wird in einen Kühlschrank mit ca. 4 °C gestellt. Das Bewegen der Proben und Erschütterungen müssen vermieden werden. Die Antifog-Wirkung wird nach vorgegebenen Zeitintervallen (1,2, 3,4, 7 Tage) beurteilt

| | | | |
|---|---|---|---|
| opake Schicht kleiner, nebelförmiger Tröpfchen opake Schicht kleiner | ***A*** | sehr schlecht | undurchsichtig, schlecht lichtdurchlässig |
| oder grosser Tropfen transparente Schicht | ***B*** | schlecht | undurchsichtig, schlecht lichtdurchlässig |
| kleiner Tropfen ungleichmässig | ***C*** | schlecht/ befriedigend | schlecht durchsichtig, Tropfen-Effekt |
| verteilte oder grosse transparente Tropfen | ***D*** | gut | ungleichmässiger Wasserfilm |
| transparenter Film - kein Wasser sichtbar | ***E*** | hervorragend | komplett durchsichtig |

Die Resultate sind in nachstehender Tabelle gezeigt:

| Beispiel | Antifog Tag 1 | Antifog Tag 2 |
|---|---|---|
| 4 | E | E |
| 4 | C-D | E |
| 4 | C | D |
| 4 | C | D |
| 5 | E | E |
| 5 | E | E |
| 5 | E | E |
| 5 | E | E |
| 6 | C | D-E |
| 6 | C | D |
| 6 | C | C |
| 6 | D-E | D-E |

Sämtliche Folien gemäss den Beispielen 1 bis 3 zeigten gute Antifog-Eigenschaften. Die Folie gemäss Beispiel 2 zeigte hierbei die besten Antifog-Eigenschaften.

## Patentansprüche

1. Antifog-Material, umfassend mindestens eine Substanz mit Antifog-Eigenschaften und ein Polyethylen, vorzugsweise mit einer Schmelzflussrate (MFR) im Bereich von 3 bis 10 g/10 min, besonders bevorzugt 4 bis 9 g/10 min, bei einer Auflagelast von 21.6 N und einer Temperatur von 190°C.

2. Antifog-Material nach Anspruch 1, **dadurch gekennzeichnet, dass** in dem Antifog-Material 5 bis 30 Gew.-%, vorzugsweise 10 bis 20 Gew.-% und besonders bevorzugt 12 bis 18 Gew.-%, bezogen auf das Gesamtgewicht des Antifog-Materials, an mindestens einer Substanz mit Antifog-Eigenschaften enthalten sind.

3. Folie (F), umfassend eine Siegelschicht (7), **dadurch gekennzeichnet, dass** die Siegelschicht (7) ein Antifog-Material gemäss einem der Ansprüche 1 bis 3 enthält und einen Anteil an Polypropylen von 50 bis 80 Gew.-%, vorzugsweise 50 bis 70 Gew.-%, bezogen auf das Gesamtgewicht der Siegelschicht, aufweist.

4. Folie nach Anspruch 3, **dadurch gekennzeichnet, dass** die Siegelschicht (7) gegen eine Schicht aus Polyethylenterephthalat kaschiert ist.

5. Folie nach Anspruch 3, **dadurch gekennzeichnet, dass** die Folie zusätzlich eine Deckschicht (1) und eine Barriereschicht (3) aufweist.

6. Folie nach Anspruch 5, **dadurch gekennzeichnet, dass** die Folie zusätzlich zwei die Barriereschicht (3) einschliessende Haftvermittlerschichten (2, 4) umfasst.

7. Folie nach einem der Ansprüche 3 bis 6, **dadurch gekennzeichnet, dass** die Folie zwei oder vier, vorzugsweise zwei zusätzliche Schichten (5, 6) enthält, welche vorzugsweise ein Polypropylen-Copolymer, besonders bevorzugt ein Polypropylen-Polyethylen-Copolymer, als Hauptbestandteil umfassen.

8. Folie nach einem der Ansprüche 5 bis 7, **dadurch gekennzeichnet, dass** die Barriereschicht ein Ethylenvinylalkohol-Copolymer als Hauptbestandteil umfasst.

9. Folie nach einem der Ansprüche 3 bis 8, **dadurch gekennzeichnet, dass** die Siegelschicht ein Gemisch aus einem Polypropylen-Copolymer, vorzugsweise einem Polypropylen-Polyethylen-Copolymer, einem Ethylen-α-Olefin-Copolymer, gegebenenfalls einem Polyethylen geringer Dichte, und dem Antifog-Material umfasst.

10. Folie nach einem der Ansprüche 5 bis 9, **dadurch gekennzeichnet, dass** die Deckschicht ein Polypropylen-Copolymer, vorzugsweise ein Polypropylen-Polyethylen-Copolymer, als Hauptbestandteil oder eine Mischung aus einem Ethylen-α-Olefin-Copolymer und einem Polyethylen geringer Dichte umfasst.

11. Folie nach einem der Ansprüche 3 bis 10, **dadurch gekennzeichnet, dass** die Folie eine Gesamtdicke im Bereich von 30 bis 65 µm, vorzugsweise von 30 bis 50 µm, besonders bevorzugt von 40 µm aufweist.

12. Verfahren zur Herstellung einer Folie (F) gemäss einem der Ansprüche 3 bis 11, **dadurch gekennzeichnet, dass** die Folie (F) im Blasextrusionsverfahren hergestellt wird.

13. Verwendung eines Antifog-Materials gemäss einem der Ansprüche 1 oder 2 in einer Folie, vorzugsweise in einer Folie gemäss einem der Ansprüche 3 bis 11.

14. Verwendung einer Folie gemäss einem der Ansprüche 3 bis 11 zur Versiegelung von Artikeln, vorzugsweise zur Verpackung von Waren, insbesondere von Lebensmitteln.

15. Artikel, vorzugsweise Verpackung, insbesondere Lebensmittelverpackung, umfassend einen Grundkörper, beispielsweise eine Verpackungsschale aus vorzugsweise Polypropylen, mit einer Öffnung und eine die Öffnung des Grundkörpers verschliessende Folie gemäss einem der Ansprüche 3 bis 11.
